# FASCICULE DE BREVET EUROPEEN

(11) **EP 3 619 114 B1**
(45) Date de publication et mention de la délivrance du brevet: **19.10.2022**
(21) Numéro de dépôt: 18719581.3
(22) Date de dépôt: 27.04.2018
(51) Int. Cl.: B64D 11/06, B60N 3/00, B60N 2/42, B64D 25/04, B64D 11/00

(54) **SIÈGE MUNI D'UN SYSTÈME DE VERROUILLAGE DE TABLETTE EN CAS DE CHOC**
MIT EINEM SYSTEM ZUR VERRIEGELUNG DES TABLETTTISCHS IM FALL EINES AUFPRALLS AUSGESTATTETER SITZ
SEAT PROVIDED WITH A SYSTEM FOR LOCKING THE TRAY TABLE IN THE EVENT OF AN IMPACT

(30) Priorité: 03.05.2017 FR 1770447
(43) Date de publication de la demande: 11.03.2020
(73) Titulaire: Safran Seats, 78370 Plaisir (FR)
(72) Inventeur: MARAIS, Jean-Charles, 36260 Sainte-Lizaigne (FR); DEBAUGNIES, Alexandre, 36130 Montierchaume (FR); CIGURET, David, 36120 Bommiers (FR); RAJHI, Mourad, 36000 Chateauroux (FR)
(74) Mandataire: Marconnet, Sébastien
(86) Numéro de dépôt international: PCT/EP2018/060930
(87) Numéro de publication internationale: WO 2018/202585

(56) Documents cités:
- WO-A1-2014/154666
- FR-A1- 2 948 326
- FR-A1- 3 022 863

## Description

La présente invention porte sur un siège, notamment d'aéronef, muni d'un système de verrouillage de tablette en cas de choc.

Afin d'assurer un niveau de sécurité élevé, les sièges d'aéronef sont soumis à des essais représentatifs d'un accident aérien. Un critère important est le risque d'accrochage du menton, critère dit de "chin entrapment" en anglais, par la tablette lors du mouvement de la tête ou par toutes singularités importantes de forme ou de rigidité situées sur la trajectoire de glissement de la tête du mannequin sur le dossier.

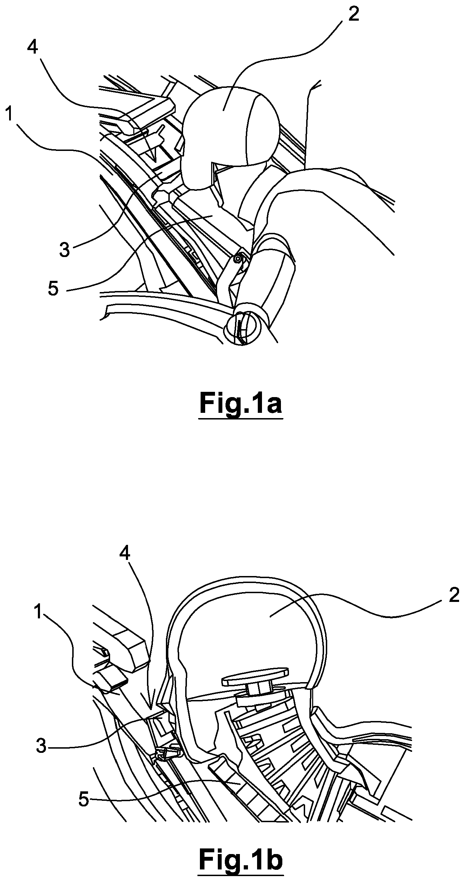

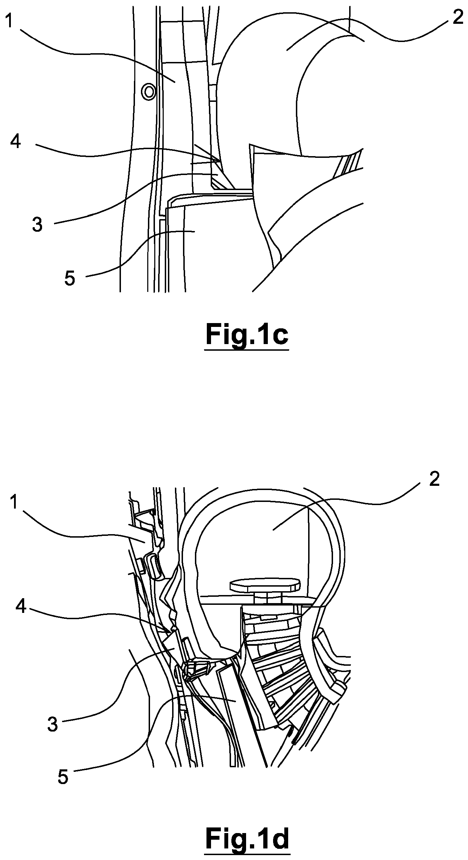

En effet, dans les configurations actuelles de dossier de siège, il est courant que lors d'un choc contre le dossier 1 du siège avant, la tête du passager 2 déforme le siège, de telle manière que le menton est ensuite susceptible d'accrocher le bord supérieur de la tablette 5 correspondant à la zone d'attrape. En effet, lors du choc, la tête 2 enfonce la barre 3 située dans la zone d'un logement 4 positionné au-dessus d'une tablette 5, tel que cela est montré sur la figure 1a. On observe un retour du menton après l'impact primaire pouvant consister en un glissement consécutif au choc: le dossier s'avançant, le retour du menton est relatif à la tablette 5. Lors du retour du menton, le menton accroche la tablette 5 lorsqu'elle est escamotée en position rangée, et vient l'ouvrir, tel que cela est montré sur les figures 1b et 1c. La tablette 5 est alors susceptible de se coincer dans le cou du passager 2, ce qui est peut lui causer des blessures sévères, tel que cela est montré sur la figure 1d.

Le document FR2948326 décrit un siège comportant un dossier inclinable selon un axe de pivotement et une tablette de travail mobile entre une position d'utilisation horizontale et une position de rangement dans laquelle la tablette est relevée contre le dossier. La tablette est pivotante sur un support monté sur une partie supérieure d'un flasque d'armature du siège par un ensemble de deux bielles articulées selon des axes d'articulation, au-dessus de l'axe de pivotement du dossier, de manière à former un quadrilatère déformable.

L'invention vise à remédier efficacement à cet inconvénient en proposant un siège selon l'objet de la revendication indépendante 1.

L'invention permet ainsi grâce à l'utilisation de l'élément de verrouillage d'empêcher une ouverture intempestive de la tablette ou le décalage angulaire de la tablette en cas de crash. On évite ainsi le risque d'accrochage du menton du passager sur le bord supérieur de la tablette.

Selon une réalisation, le système de verrouillage comporte au moins un élément de verrouillage connecté au loquet par l'intermédiaire d'un dispositif de transmission de mouvement.

Selon une réalisation, le dispositif de transmission de mouvement comporte un balancier relié d'une part au loquet et d'autre part à l'élément de verrouillage par l'intermédiaire d'une liaison pivot.

Selon une réalisation, le balancier est relié au loquet par l'intermédiaire d'un bras.

Selon une réalisation, le bras comporte une extrémité solidaire en rotation d'un axe du loquet et une extrémité montée rotative par rapport au balancier.

Selon une réalisation, lorsque le loquet est dans la position verrouillée, une ouverture de l'élément de verrouillage est située en regard d'un crochet fixe solidaire d'une structure de siège tout en étant à distance de ce crochet, de telle façon qu'en cas de déformation du siège, ledit crochet pénètre dans l'ouverture de l'élément de verrouillage pour maintenir la tablette en position rangée.

Selon une réalisation, ledit siège comporte deux éléments de verrouillage latéraux situés de part et d'autre du loquet.

Selon une réalisation, le système de verrouillage est intégré à l'intérieur d'une cassette.

Selon une réalisation, la cassette est implantée dans la tablette en étant logé dans l'épaisseur de la tablette.

Selon une réalisation, l'élément de verrouillage est monté rotatif par rapport à la cassette par l'intermédiaire d'une liaison pivot.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1a à 1d, déjà décrites, sont des vues illustrant le risque d'accrochage du menton par la tablette lors d'un choc pour un siège équipé d'une tablette selon l'état de la technique;
- La figure 2 est une vue en perspective d'un dossier de siège équipé d'une tablette munie d'un système de verrouillage selon la présente invention;
- La figure 3 est une vue en perspective du siège de la figure 2 sans la tablette afin de mettre en évidence la cassette intégrant le système de verrouillage selon l'invention;
- La figure 4 est une vue en perspective de la cassette intégrant le système de verrouillage selon la présente invention;
- Les figures 5 et 6 est des vues en perspective détaillées du système de verrouillage selon la présente invention;
- La figure 7 est une vue en perspective du capot du siège selon la présente invention;
- La figure 8 est un schéma de fonctionnement cinématique du système de verrouillage selon la présente invention.

Il est à noter que, sur les figures, les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs de type "avant", "arrière", "inférieur", "supérieur", sont à considérer pour un siège en position d'utilisation dans une cabine d'aéronef.

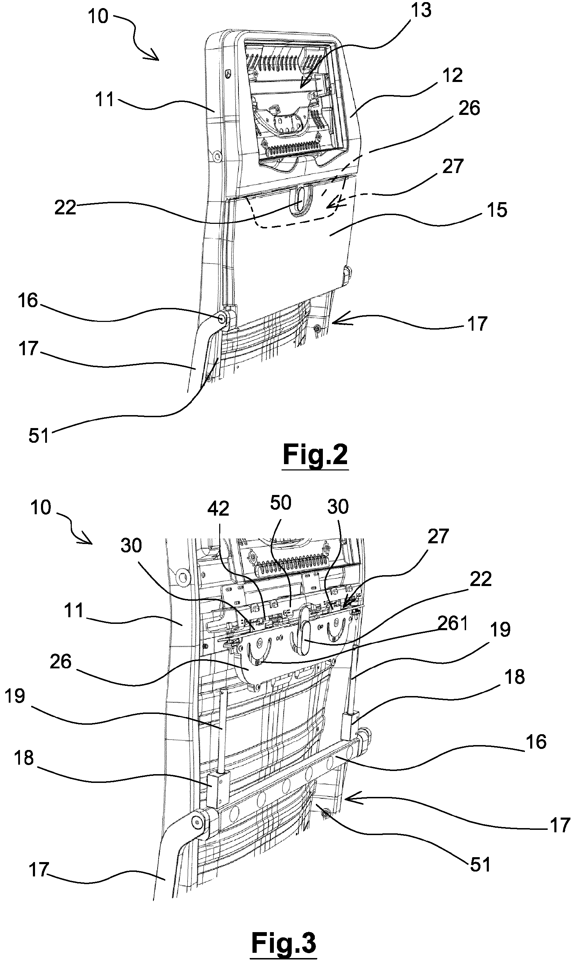

La figure 2 montre un siège d'avion 10 comportant un dossier 11 ayant du côté de sa face arrière un capot 12 situé en partie supérieure. Ce capot 12 comporte un logement 13 de réception d'un écran multimédia (non représenté).

En outre, une tablette 15 est mobile entre une position déployée dans laquelle la tablette 15 est écartée par rapport au dossier 11 de manière à s'étendre suivant un plan sensiblement horizontal et une position rangée dans laquelle la tablette 15 est rabattue contre la face arrière du dossier 11, tel que cela est représenté sur la figure 2.

A cet effet, comme on peut le voir sur la figure 3, la tablette 15 est montée rotative autour d'un axe de pivotement 16 par rapport aux extrémités supérieures de deux bras 17 situés de part et d'autre du dossier 11. En position déployée, la tablette 15 pourra également être mobile en translation par le biais d'une glissière formée par exemple par deux coulisses 18 solidaires de la tablette 15 pouvant glisser le long de deux tiges 19 solidaires de l'axe de pivotement 16.

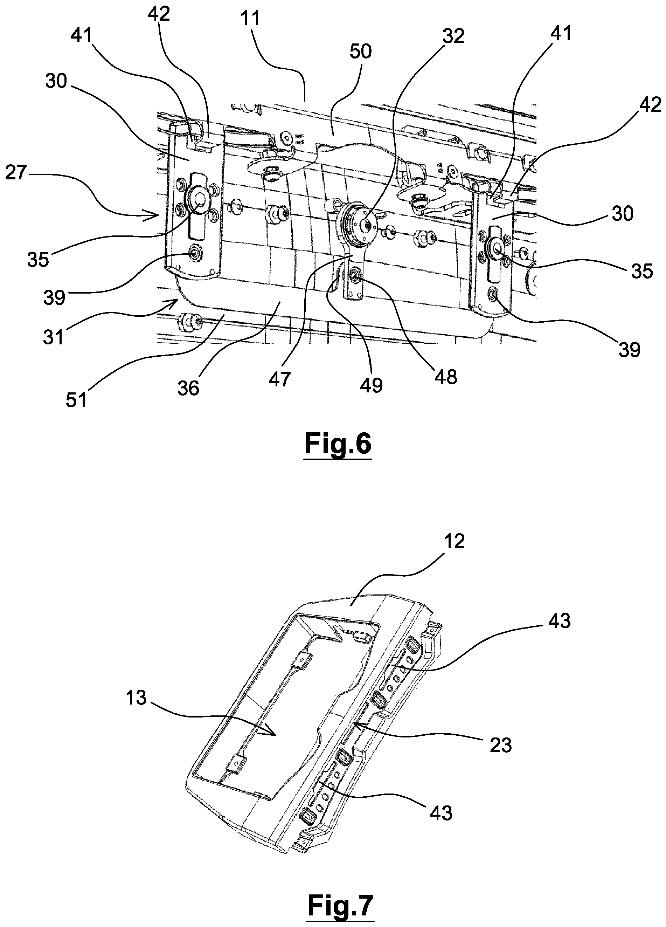

Un loquet 22 permet de maintenir la tablette 15 en position rangée. Le loquet 22 est mobile entre une position déverrouillée sensiblement horizontale dans laquelle le loquet 22 est dégagé d'un logement 23 correspondant prévu dans le capot 12 (cf. figure 7) et une position verrouillée sensiblement verticale dans laquelle le loquet 22 est engagé dans le logement 23 pour maintenir la tablette 15 en position rangée. Alternativement, le loquet 22 est monté mobile en translation entre la position déverrouillée et la position verrouillée. Le déplacement en translation du loquet 22 pourra être latéral ou vertical.

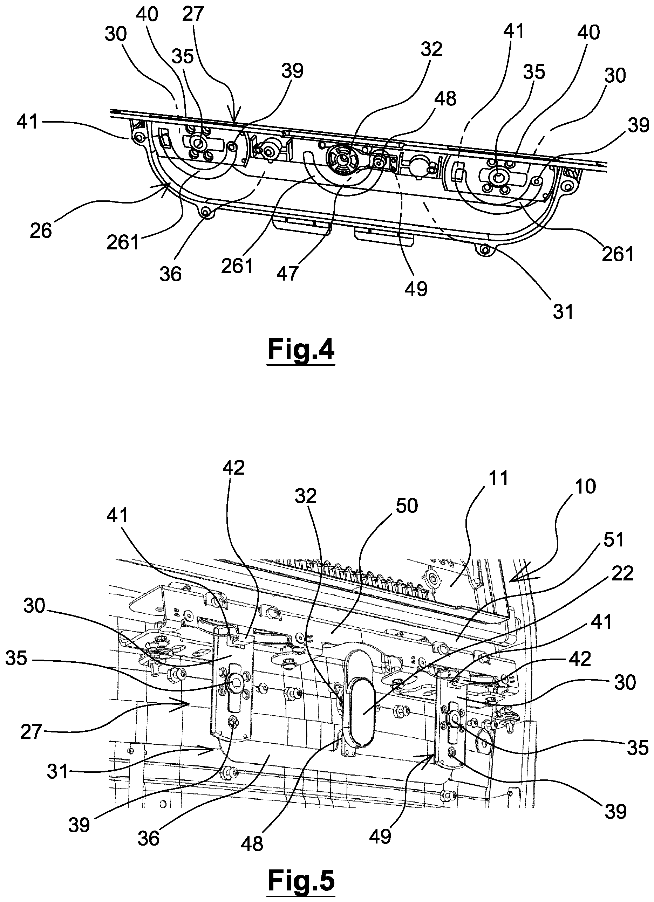

Par ailleurs, comme on peut le voir sur les figures 3 et 4, une cassette 26 intègre un système de verrouillage 27 permettant de maintenir la tablette 15 en position rangée suite à une déformation du siège 10 lors d'un choc. La cassette 26 est implantée dans la tablette 15 en étant logé dans l'épaisseur e la tablette 15.

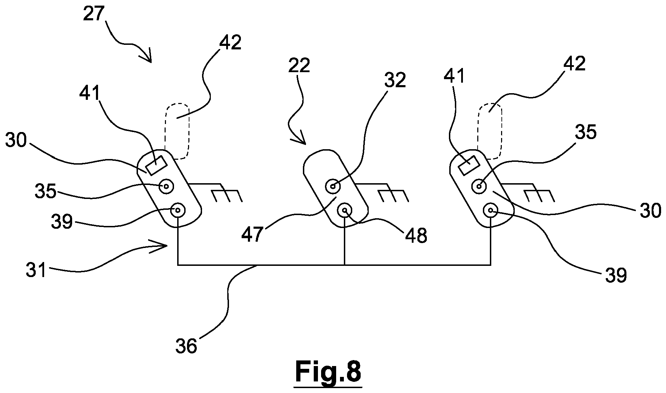

Plus précisément, comme on peut le voir sur les figures 5, 6, et 8, le système de verrouillage 27 comporte deux éléments de verrouillage 30 latéraux situés de part et d'autre du loquet de verrouillage 22 ainsi qu'un dispositif de transmission de mouvement 31 entre un axe 32 du loquet 22 et les éléments de verrouillage latéraux 30. Les éléments de verrouillage 30 en forme globalement de plaque rectangulaire sont montés rotatif par rapport à la cassette 26 fixée à la tablette 15. A cet effet, chaque élément de verrouillage 30 comporte centralement une liaison pivot 35.

En outre, une extrémité de chaque élément de verrouillage 30 est articulée par rapport à un balancier 36 du dispositif 31 par le biais d'une liaison pivot 39. L'autre extrémité de chaque élément de verrouillage 30 est munie d'une ouverture 41 destinée à venir en regard d'un crochet 42 correspondant lorsque le loquet 22 est en position verrouillée. Comme on peut le voir sur la figure 4, des ouvertures 40 ménagées dans la face supérieure de la cassette 26 autorisent le déplacement des éléments de verrouillage 30 d'une position à une autre. Le capot 12 est également muni de deux ouvertures 43 correspondantes, tel que cela est visible sur la figure 7. Ces deux ouvertures 43 présentent un dégagement central pour permettre un déplacement des éléments de verrouillage 30 lors d'une déformation du siège 10.

Par ailleurs, le balancier 36 est relié au loquet 22 par l'intermédiaire d'un bras 47. Comme on peut le voir sur la figure 6, le bras 47 comporte une extrémité solidaire en rotation de l'axe 32 du loquet 22 et une extrémité montée rotative par rapport au balancier 36 via une liaison pivot 48.

Dans l'exemple représenté, le balancier 36 présente une forme allongée suivant une direction transversale du siège 10 et des portions en saillie 49 s'étendant perpendiculairement par rapport à la portion allongée et dirigées vers le haut. Les différentes liaisons pivots 39, 48 sont implantées sur les extrémités libres des portions en saillie 49 du balancier 36. Comme on peut le voir sur les figures 3 et 4, il sera possible de prévoir dans la cassette 26 des rainures de guidage 261 de forme semi-circulaire pour assurer un guidage des liaisons 39 et 48 lors d'un déplacement du balancier 36 d'une position à une autre.

Par ailleurs, les crochets 42 sont ménagés dans un support transversal 50. Ce support transversal 50 est solidaire de la structure 51 du siège 10 portant le dossier 11. Dans l'exemple représenté, les crochets 42 présentent une forme en L. En effet, les crochets 42 sont situés à distance de la face arrière du dossier 11 et comportent une portion dirigée vers le bas s'étendant sensiblement parallèlement à la face arrière du dossier 11 et une portion d'extrémité repliée dirigée vers la face arrière du dossier 11. En position de verrouillage, chaque ouverture 41 d'un élément de verrouillage 30 est située entre la face arrière du dossier 11 et l'extrémité du crochet 42 correspondant.

On décrit ci-après le fonctionnement du système de verrouillage 27 selon la présente invention.

Lorsque la tablette 15 est en position déployée, les éléments de verrouillage 30 sont rentrés à l'intérieur de la cassette 26, tel que cela est représenté sur la figure 4.

Afin de mettre la tablette 15 en position rangée, la tablette 15 est pivotée autour de l'axe 16, de telle façon que la tablette 15 vient se plaquer contre la face arrière du dossier 11. Les éléments de verrouillage 30 présentent leur ouverture 41 décalée circonférentiellement par rapport aux crochets 42 correspondants. Le loquet 22 est ensuite tourné d'un angle de 90 degrés pour passer en position verrouillée afin de maintenir la tablette 15 en position. La rotation du loquet 22 entraîne, via le bras 47, un déplacement du balancier 36, lequel déplace les éléments de verrouillage 30 dans une position verticale, tel que cela est illustré sur les figures 5 et 6.

Ainsi, lorsque le loquet 22 est dans la position verrouillée, les ouvertures des éléments de verrouillage 30 se situent en regard d'un crochet fixe 42 tout en étant à distance de ce crochet 42. En cas de déformation du siège 10, au moins un crochet 42 pénètre dans l'ouverture 41 d'un élément de verrouillage 30 pour maintenir la tablette 15 en position rangée. En effet, suite à la déformation de la structure de siège 51 se produisant par exemple dans une phase de déformation du plancher dite de "pitch and roll" en anglais au cours de laquelle une contrainte est imprimée à un des rails du siège 10 de manière à le faire descendre et une contrainte est imprimée à l'autre rail de manière à le faire pivoter, il se produit un déplacement relatif entre un élément de verrouillage 30 et un crochet 42 en regard correspondant, de telle façon qu'au moins un des crochets 42 pénètre à l'intérieur de l'ouverture 41 correspondante. La tablette 15 solidaire de l'élément de verrouillage 30 en prise avec le crochet 42 est alors maintenue en position rangée.

Si le siège 10 n'a pas subi de déformation, une rotation du loquet 22 dans un sens opposé vers la position déverrouillée entraîne un déplacement du balancier 36. Le balancier 36 déplace les éléments de verrouillage 30 dans la position horizontale dans laquelle les éléments de verrouillage 30 sont rentrés dans la tablette 15, de sorte que les ouvertures 41 des éléments 30 sont décalés circonférentiellement par rapport aux crochets 42, c'est-à-dire que les ouvertures 41 ne sont plus en regard des crochets 42. La tablette 15 peut alors être de nouveau pivotée vers le bas autour de l'axe 16 pour repasser en position déployée.

On remarque ainsi que lorsque le siège 10 n'est pas déformé, les éléments de verrouillage 30 n'interfèrent pas avec le fonctionnement de la tablette 15 qui se comporte comme si elle était munie uniquement d'un loquet de verrouillage 22. Ce n'est que lorsque le siège 10 est déformé que les éléments de verrouillage 30 agissent afin d'éviter l'ouverture intempestive de la tablette 15 et donc le risque d'accrochage du menton du passager.

En variante, il sera possible de prévoir plus de deux éléments de verrouillage 30 ou un seul élément de verrouillage 30 relié mécaniquement à l'axe du loquet 22 par l'intermédiaire du balancier 36.

L'invention pourra également être mise en œuvre avec des sièges installés dans d'autres moyens de transport, comme par exemple des sièges de véhicules automobiles, de trains, ou de bateaux.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Siège (10) comportant un dossier (11) portant du côté d'une face arrière une tablette (15) mobile entre une position déployée et une position rangée,
- ladite tablette (15) comportant un loquet (22) mobile entre une position déverrouillée et une position verrouillée,
**caractérisé en ce que** ladite tablette (15) comporte en outre un système de verrouillage (27) configuré pour maintenir la tablette (15) en position rangée suite à une déformation dudit siège (10) lors d'un choc,
- le système de verrouillage (27) comportant au moins un élément de verrouillage (30) connecté au loquet (22) par l'intermédiaire d'un dispositif de transmission de mouvement (31),
- et **en ce que**, lorsque le loquet (22) est dans la position verrouillée, une ouverture (41) de l'élément de verrouillage (30) est située en regard d'un crochet (42) fixe solidaire d'une structure de siège tout en étant à distance de ce crochet (42), de telle façon qu'en cas de déformation du siège (10), ledit crochet (42) pénètre dans l'ouverture (41) de l'élément de verrouillage (30) pour maintenir la tablette (15) en position rangée.

2. Siège (10) selon la revendication 1, **caractérisé en ce que** le dispositif de transmission de mouvement (31) comporte un balancier (36) relié d'une part au loquet (22) et d'autre part à l'élément de verrouillage (30) par l'intermédiaire d'une liaison pivot.

3. Siège (10) selon la revendication 2, **caractérisé en ce que** le balancier (36) est relié au loquet (22) par l'intermédiaire d'un bras (47).

4. Siège (10) selon la revendication 3, **caractérisé en ce que** le bras (47) comporte une extrémité solidaire en rotation d'un axe du loquet (22) et une extrémité montée rotative par rapport au balancier (36).

5. Siège (10) selon l'une quelconque des revendications 1 à 4, **caractérisé en ce qu'**il comporte deux éléments de verrouillage (30) latéraux situés de part et d'autre du loquet (22).

6. Siège (10) selon l'une quelconque des revendications 1 à 5, **caractérisé en ce que** le système de verrouillage (27) est intégré à l'intérieur d'une cassette (26).

7. Siège (10) selon la revendication 6, **caractérisé en ce que** la cassette (26) est implantée dans la tablette (15) en étant logé dans l'épaisseur de la tablette (15).

8. Siège (10) selon les revendications 1 et 6, **caractérisé en ce que** l'élément de verrouillage (30) est monté rotatif par rapport à la cassette (26) par l'intermédiaire d'une liaison pivot.

## Patentansprüche

1. Sitz (10) mit einer Rückenlehne (11), deren Rückseite mit einer Klappe (15) versehen ist, die zwischen einer ausgefahrenen Position und einer verstauten Position bewegbar ist, wobei
- die Klappe (15) einen Riegel (22) umfasst, der zwischen einer unverriegelten Position und einer verriegelten Position bewegbar ist,
**dadurch gekennzeichnet, dass** die Klappe (15) ferner ein Verriegelungssystem (27) umfasst, das konfiguriert ist, um die Klappe (15) nach einer Verformung des Sitzes (10) während eines Aufpralls in der verstauten Position zu halten,
- wobei das Verriegelungssystem (27) mindestens ein Verriegelungselement (30) umfasst, das über eine Bewegungsübertragungseinrichtung (31) mit dem Riegel (22) verbunden ist,
- und dass, wenn sich der Riegel (22) in der verriegelten Position befindet, eine Öffnung (41) des Verriegelungselements (30) gegenüber einem feststehenden, fest mit einer Sitzstruktur verbundenen Haken (42) und mit einem Abstand von diesem Haken (42) angeordnet ist, so dass im Falle einer Verformung des Sitzes (10) der Haken (42) in die Öffnung (41) des Verriegelungselements (30) eintritt, um die Klappe (15) in der verstauten Position zu halten.

2. Sitz (10) nach Anspruch 1, **dadurch gekennzeichnet, dass** die Bewegungsübertragungseinrichtung (31) eine Schwinge (36) umfasst, die einerseits mit dem Riegel (22) und andererseits mit dem Verriegelungselement (30) über eine Schwenkverbindung verbunden ist.

3. Sitz (10) nach Anspruch 2, **dadurch gekennzeichnet, dass** die Schwinge (36) über einen Arm (47) mit dem Riegel (22) verbunden ist.

4. Sitz (10) nach Anspruch 3, **dadurch gekennzeichnet, dass** der Arm (47) ein mit einer Achse des Riegels (22) drehfest verbundenes Ende und ein relativ zu der Schwinge (36) drehbar montiertes Ende aufweist.

5. Sitz (10) nach einem der Ansprüche 1 bis 4, **dadurch gekennzeichnet, dass** er zwei seitliche Verriegelungselemente (30) umfasst, die sich zu beiden Seiten des Riegels (22) befinden.

6. Sitz (10) nach einem der Ansprüche 1 bis 5, **dadurch gekennzeichnet, dass** das Verriegelungssystem (27) innerhalb einer Kassette (26) integriert ist.

7. Sitz (10) nach Anspruch 6, **dadurch gekennzeichnet, dass** die Kassette (26) in der Klappe (15) in der Dicke der Klappe (15) gelagert ist.

8. Sitz (10) nach den Ansprüchen 1 und 6, **dadurch gekennzeichnet, dass** das Verriegelungselement (30) relativ zur Kassette (26) über eine Schwenkverbindung drehbar gelagert ist.

## Claims

1. A seat (10) comprising a backrest (11) whose rear side is provided with a tray table (15) movable between a deployed position and a stowed position,
- said tray table (15) comprising a latch (22) movable between an unlocked position and a locked position, **characterized in that** said tray table (15) further comprises a locking system (27) configured to hold the tray table (15) in the stowed position further to a deformation of said seat (10) during an impact,
- the locking system (27) comprising at least one locking element (30) connected to the latch (22) via a movement transmission device (31),
- and **in that**, when the latch (22) is in the locked position, an opening (41) of the locking element (30) is located opposite a fixed hook (42) integral with a seat structure while being at a distance from this hook (42), so that in the event of a deformation of the seat (10), said hook (42) enters the opening (41) in the locking element (30) in order to hold the tray table (15) in the stowed position.

2. The seat (10) according to claim 1, **characterized in that** the movement transmission device (31) comprises a rocker (36) connected on the one hand to the latch (22) and on the other hand to the locking element (30) via a pivot link.

3. The seat (10) according to claim 2, **characterized in that** the rocker (36) is connected to the latch (22) via an arm (47) .

4. The seat (10) according to claim 3, **characterized in that** the arm (47) comprises one end linked in rotation with an axis of the latch (22) and one end rotatably mounted relative to the rocker (36).

5. The seat (10) according to any one of the claims 1 to 4, **characterized in that** it comprises two lateral locking elements (30) located on either side of the latch (22).

6. The seat (10) according to any one of the claims 1 to 5, **characterized in that** the locking system (27) is integrated inside a cassette (26).

7. The seat (10) according to claim 6, **characterized in that** the cassette (26) is located in the tray table (15) in the thickness of the tray table (15).

8. The seat (10) according to claims 1 and 6, **characterized in that** the locking element (30) is rotatably mounted relative to the cassette (26) via a pivot link.
